# EUROPÄISCHE PATENTSCHRIFT

(11) **EP 1 074 763 B1**
(45) Veröffentlichungstag und Bekanntmachung des Hinweises auf die Patenterteilung: **02.10.2002**
(21) Anmeldenummer: 00110851.3
(22) Anmeldetag: 23.05.2000
(51) Int. Cl.: F16F 15/26

(54) **Brennkraftmaschine**
Internal combustion engine
Moteur à combustion interne

(30) Priorität: 31.07.1999 DE 19936103
(43) Veröffentlichungstag der Anmeldung: 07.02.2001
(73) Patentinhaber: DaimlerChrysler AG, 70567 Stuttgart (DE)
(72) Erfinder: Hofheinz, Werner, 73770 Denkendorf (DE)

(56) Entgegenhaltungen:
- EP-A- 0 789 165
- DE-C- 4 206 899
- US-A- 4 993 378

## Beschreibung

Die Erfindung betrifft eine Brennkraftmaschine entsprechend dem Oberbegriff des Anspruchs 1.

Bei einer Brennkraftmaschine der gattungsgemäßen Art (DE 42 06 899 C1) sind die beiden Ausgleichswellen in einem Lagergehäuse aufgenommen, das an dem Kurbelgehäuse durch Schrauben befestigt ist und das einen Lagerstuhl mit zwei Lagerschalen und zwei Lagerdeckel, einen für jede Ausgleichswelle, aufweist, die durch Schrauben zusammengespannt sind. Das die Ausgleichswellen in ihrer Gesamtheit aufnehmende Lagergehäuse ist teuer in der Herstellung, benötigt relativ viel Platz und erhöht das Gewicht der Brennkraftmaschine. Es hat überdies einen beträchtlichen Montageaufwand.

Der Erfindung liegt die Aufgabe zugrunde, bei einer Brennkraftmaschine der gattungsgemäßen Art die Lagerung der Ausgleichswellen zu vereinfachen.

Diese Aufgabe wird erfindungsgemäß durch das Kennzeichen des Anspruchs 1 gelöst.

Bei dem erfindungsgemäßen Vorschlag sind die Ausgleichswellenlager nicht in einem Lagergehäuse vorgesehen, sondern einzeln auf Verlängerungen der Kurbelwellenlagerschrauben gehalten. Dabei sind vorzugsweise die Ober- und Unterteile der Ausgleichswellenlager zur Aufnahme beider Ausgleichswellen ausgebildet, wobei durch auf die Schraubenverlängerungen aufgeschraubte Muttern die Oberteile gegen die darüberliegenden Lagerdeckel der Kurbelwellenlager gedrückt und gleichzeitig die Ober- und Unterteile zusammengespannt werden. Es sind somit keine eigenen Schrauben und Gewindelöcher zum Befestigen der Ausgleichswellenlager und zum Zusammenspannen der Teile der Ausgleichswellenlager erforderlich, wodurch der Platzbedarf für die Lagerung der Ausgleichswellen verringert wird.

Die Abstützung der Oberteile der Ausgleichswellenlager an darüberliegenden Lagerdeckeln kann auf verschiedene Weise erfolgen. So können die Oberteile an diesen Lagerdeckeln anliegen und durch Paßstifte genau in der richtigen Lage fixiert werden. Bei einer anderen Ausführung kann das Oberteil jedes Ausgleichswellenlagers mit dem darüberliegenden Lagerdeckel einstückig gefertigt werden, worauf diese Teile durch Cracken voneinander getrennt werden und an den Bruchflächen aneinander anliegen. Durch diese an sich bei Pleuellagern bekannte Methode erübrigt sich eine Bearbeitung der aneinander anliegenden Flächen und es wird aufgrund der Unebenheit dieser Flächen eine sehr exakte Fixierung des Ausgleichswellenlagers erreicht.

Eine weitere Möglichkeit der Abstützung des Oberteiles jedes Ausgleichswellenlagers am darüberliegenden Lagerdeckel besteht darin, zwischen dem Oberteil und den Muttern, die den Lagerdeckel festspannen, auf jeder Schraubenverlängerung eine Distanzhülse vorzusehen, die sehr genau gefertigt werden kann. Dies hat den Vorteil, daß die Kurbelwellenlager-Muttern von den das Ausgleichswellenlager befestigenden Muttern nicht entlastet werden. Die Distanzhülsen können gegebenenfalls mit den Muttern einstückig sein. Die exakte Lage des Oberteiles kann durch Paßstifte sichergestellt werden. Diese Paßstifte können entfallen, wenn die Muttern mit den Distanzhülsen selbst nach Art von Paßstiften ausgeführt und angeordnet werden.

Ist im Kurbelgehäuse ein Ölhobel vorgesehen, so kann dieser zwischen den Oberteilen der Ausgleichswellenlager und den Lagerdeckel der darüberliegenden Kurbelwellenlager angeordnet werden. Er kann durch parallel zu den Kurbelwellenlagerschrauben verlaufende Stifte fixiert sein, die sich jeweils einerseits in miteinander fluchtende Bohrungen in den Ober- und Unterteilen der Ausgleichswellenlager und andererseits in eine Bohrung im Lagerdeckel erstrecken und Lagerstuhlschwingungen in Kurbelwellen-Längsrichtung verhindern und Toleranzen in Hochrichtung ausgleichen. Der Ölhobel kann, sofern dies gießtechnisch möglich ist, in einer Grundplatte integriert sein, die mit dem Kurbelgehäuse einstückig ist. Altemativ kann diese Grundplatte zwischen den Oberteilen der Ausgleichswellenlager und den Lagerdeckeln der darüberliegenden Kurbelwellenlager angeordnet und durch die auf die Schraubenverlängerungen aufgeschraubten Muttern eingespannt werden.

Ausführungsbeispiele der Erfindung werden im folgenden unter Bezugnahme auf die Zeichnungen beschrieben. Es zeigt:
- Fig. 1: einen Querschnitt eines Kurbelgehäuses im Bereich eines Kurbelwellenlagers mit einem ersten Ausführungsbeispiel der Erfindung,
- Fig. 2: einen Querschnitt ähnlich Fig. 1 mit einem zweiten Ausführungsbeispiel, wobei jedoch das Kurbelgehäuse mit der Lagerschale des Kurbelwellenlagers weggelassen ist, und
- Fig. 3: eine perspektivische Darstellung der vollständigen Lagerung der Ausgleichswellen in Lagern der in Fig. 2 dargestellten Art, und
- Fig. 4: einen Querschnitt ähnlich Fig. 1 mit einem dritten Ausführungsbeispiel, bei dem anstelle von Zugankern Kopfschrauben zur Verschraubung vorgesehen sind.

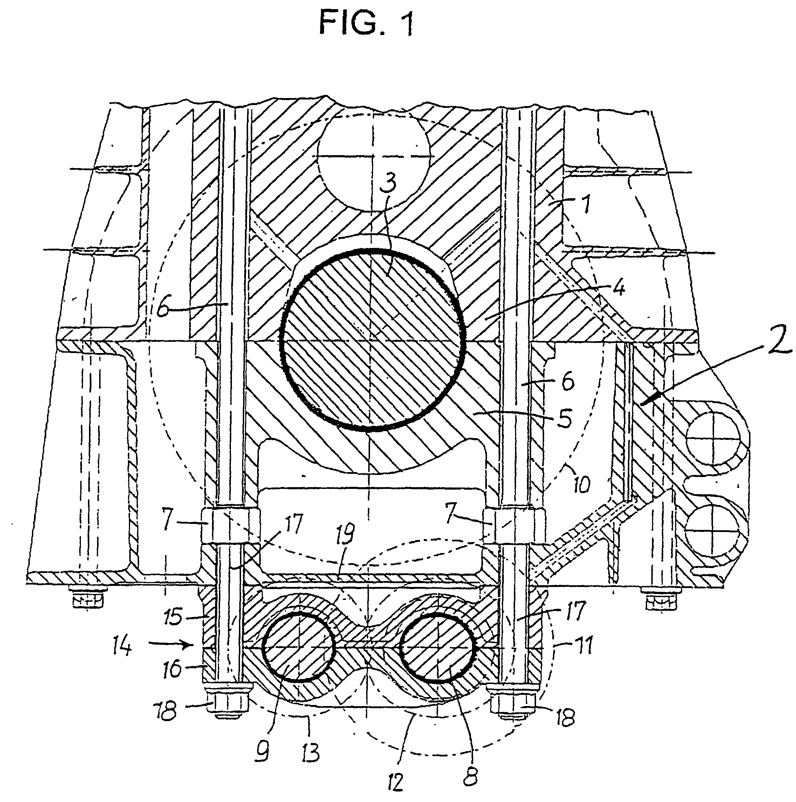

in Fig. 1 ist ein Kurbelgehäuse einer Brennkraftmaschine dargestellt, das aus einem Oberteil 1 und einem Unterteil 2 besteht und in dem eine Kurbelwelle 3 gelagert ist. Die Kurbeiwellenlager bestehen jeweils aus einer am Oberteil 1 angeformten Lagerschale 4 und einem Lagerdeckel 5, die im Ausführungsbeispiel von Zugankern 6 durchsetzt sind, welche sich bis zum Zylinderkopf erstrecken, und durch auf diese aufgeschraubte Muttern 7 zusammengespannt sind. Anstelle von Zugankern können zur Halterung des Lagerdeckels 5 auch Stiftschrauben vorgesehen werden, die in Bohrungen im Oberteil 1 eingesetzt sind und sich durch den Lagerdeckel 5 erstrecken und den Lagerdeckel 5 durch aufgeschraubte Muttern 7 festspannen.

Zum Ausgleich der Massenkräfte zweiter Ordnung sind unterhalb der Kurbelwelle 3 zwei Massenausgleichswellen 8 und 9 vorgesehen, von denen die Ausgleichswelle 8 über Zahnräder 10 und 11 von der Kurbelwelle 3 mit der doppelten Kurbelwellendrehzahl angetrieben wird und seinerseits über beispielsweise ein Zahnradpaar 12, 13 die zweite Ausgleichswelle mit der gleichen Drehzahl, jedoch gegensinnig, antreibt. Möglich ist aber auch, einen Kettentrieb oder einen Zahnriementrieb zum Antrieb der Ausgleichswellen 8, 9 vorzusehen. Unterhalb von zwei Kurbelwellenlagern 4, 5 sind Ausgleichswellenlager 14 angeordnet, die jeweils aus einem Oberteil 15 und einem Unterteil 16 bestehen und zusammen zwei Lageröffnungen definieren, in. denen die Ausgleichswellen 8, 9 gelagert sind. Zur Befestigung des Lagers 14 und zum Zusammenspannen der Lagerteile 15 und 16 sind die Zuganker 6 mit Verlängerungen 17 versehen, die sich Bohrungen in den Lagerteilen 15,16 hindurch erstrecken und auf deren Enden Muttern 18 aufgeschraubt sind. Das Lageroberteil 15 stützt sich bei diesem Ausführungsbeispiel über eine Grundplatte 19, die ein Teil des Kurbelgehäuse-Unterteils 2 ist und als Ölhobel ausgebildet sein kann, und über die Muttern 7 am Lagerdeckel 5 ab. Da die Kräfte der Muttern 18 sich direkt auf den Muttern 7 abstützen, wird gewährleistet, daß das zum Lösen der Muttern 7 zu überwindende Reibmoment nicht vermindert wird.

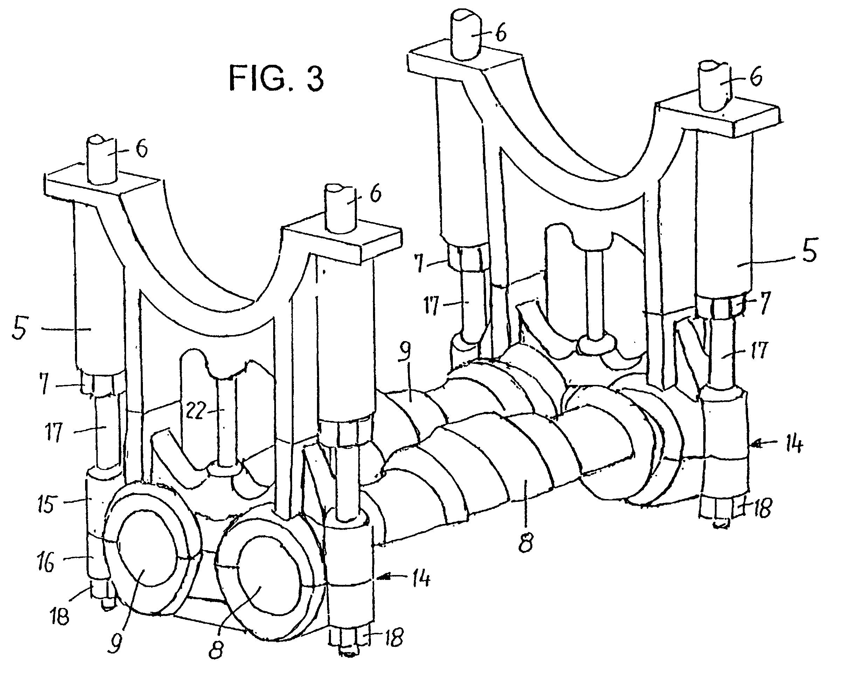

Wie in Fig. 3 für das zweite Ausführungsbeispiel dargestellt, sind für die Lagerung der Ausgleichswellen 8, 9 zwei Ausgleichswellenlager 14 vorgesehen.

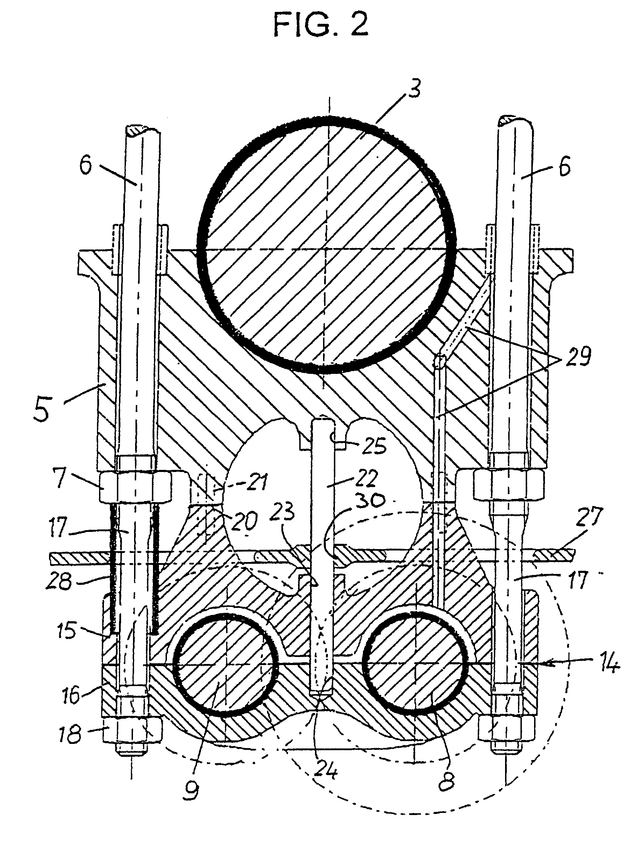

In dem zweiten Ausführungsbeispiel gemäß Fig. 2 sind nur die erfindungsrelevanten Teile dargestellt, wobei gleiche oder gleichartige Teile mit den gleichen Bezugszeichen bezeichnet sind. Wie beim ersten Ausführungsbeispiel ist das Ausgleichswellenlager 14 auf Verlängerungen 17 der Zuganker 6 aufgeschoben und durch Muttern 18 befestigt. Abweichend von der Ausführung von Fig. 1 stützt sich das Lageroberteil 15 an der Unterseite 20 des Lagerdeckels 5 ab und es ist durch Paßstifte 21 fixiert. Zur Verhinderung von Lagerstuhlschwingungen in Kurbelwellenlängsrichtung und zum Ausgleich von Toleranzen in Hochrichtung kann ein Fixierstift 22 vorgesehen werden, der sich einerseits in Bohrungen 23, 24 im Lageroberteil 15 bzw. im Lagerunterteil 16 und andererseits in eine Bohrung 25 im Lagerdeckel 5 erstreckt. Ein Ölhobel 27 ist mit dem Kurbelgehäuse 1 oder 2 fest verbunden oder einstückig daran angeformt und hindert durch seinen Kontakt mit dem Fixierstift 22 in einer Bohrung 30 die Lagerteile 5, 15 und 16 an Längsschwingungen.

Um auch bei diesem Ausführungsbeispiel eine Entlastung der Muttern 7 beim Festziehen der Muttern 18 zu vermeiden, kann, wie nur in der linken Hälfte der Fig. 2 dargestellt, auf jeder Schraubenverlängerung 17 zwischen der Mutter 7 und dem Lageroberteil 15 eine Distanzhülse 28 vorgesehen werden, über die sich das Lageroberteil 15 an der Mutter 7 und damit am Lagerdeckel 5 abstützt. Zwischen dem Lageroberteil 15 und der Unterseite 20 des Lagerdeckels 5 entsteht dann ein nicht näher dargestellter Spalt, der lediglich durch die Paßstifte 21 überbrückt wird. Wenn diese Distanzhülse 28, wie gezeigt, im Lageroberteil 15 geführt und mit der Mutter 7 einstückig ist, kann sie als Paßhülse wirken, so daß die Paßstifte 21 entfallen können. Möglich ist aber auch, anstatt der Mutter 7 eine verlängerte Distanzhülse 28 vorzusehen, so daß nur über die Mutter 18 eine Verspannung der Bauteile 15 und 16 bzw. 1 und 2 erfolgt.

Diese Paßstifte können auch dann entfallen, wenn das Lageroberteil 15 mit dem Lagerdeckel 5 einstückig gefertigt ist und diese Teile dann durch Cracken voneinander getrennt werden und an den Bruchflächen aneinander anliegen.

Mit 29 sind Ölbohrungen zur Versorgung der Ausgleichswellen mit Schmieröl bezeichnet.

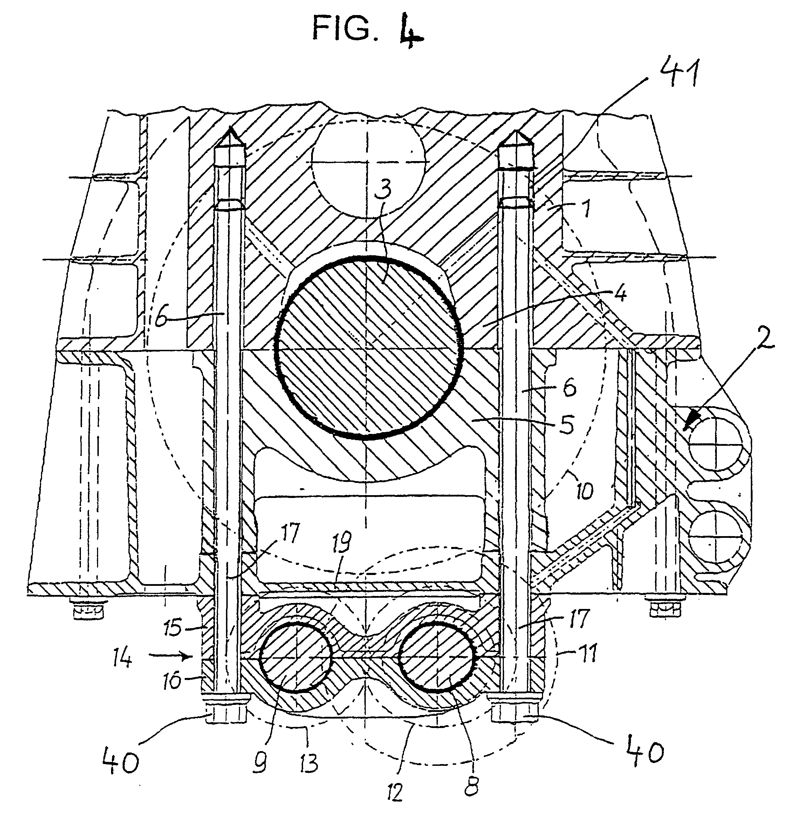

Die Figur 4 zeigt ein drittes Ausführungsbeispiel, bei dem alle gleichen oder gleichwirkenden Bauteile mit denselben Bezugszeichen der vorhergehenden Ausführungsbeispiele gekennzeichnet sind. Wie in Figur 4 dargestellt ist, sind anstelle von Zugankern Kopfschrauben 40 vorgesehen, die über die Lagerteile 15, 16 in das Unterteil 2 und den Lagerdeckel 5 eingeführt werden und in im Oberteil 1 des Kurbelgehäuses vorgesehene Gewinde 41 eingreifen. Dies ermöglicht, daß die in Figur 1 dargestellten Muttern 7 entfallen können. Im Verwendungsfalle der Zuganker oder von Stiftschrauben können die Muttern 7 in Figur 1 ebenfalls entfallen und durch Distanzhülsen ersetzt werden. Selbstverständlich ist es auch möglich, alternativ zu den in Figur 4 vorgesehenen Kopfschrauben 40 nicht näher dargestellte Stiftschrauben einzusetzen, die im Oberteil 1 verschraubt sind und über nicht näher dargestellte Muttern unterhalb des Lagerteils 16 (ähnlich zu den in Figur 1 mit dem Bezugszeichen 18 gekennzeichneten Muttern) eine Verspannung der Lagerschalen 4 mit den Lagerdeckeln 5 bewirken. Es ist aber auch möglich, daß sich die Bauteile 19 und 5 in Figur 1 oder die Bauteile 15 und 5 in Figur 2 sich direkt berühren. Über ein dann vorzusehendes Distanzblech zwischen den Bauteilen 19 und 5 in Figur 1 oder zwischen den Bauteilen 15 und 5 in Figur 2 kann bei Bedarf der Abstand zwischen Kurbelwelle 3 und Ausgleichswellen 8 und 9 präzise eingestellt werden. Selbstverständlich ist es auch möglich, bei dem zweiten Ausführungsbeispiel nach Figur 2 anstelle der Zugankern 6 Kopfschrauben nach Figur 4 zu verwenden, die ebenfalls dann in ein im Oberteil 1 vorzusehendes Gewinde 41 eingreifen, so daß die Muttern 7 entfallen bzw. durch die Distanzhülsen 28 ersetzt werden können.

Die Erfindung ist in Verbindung mit einem Lanchester-Massenausgleich mit zwei Ausgleichswellen beschrieben und dargestellt. Sie könnte jedoch auch bei einem Massenausgleich mit nur einer Ausgleichswelle oder mit mehr als zwei Ausgleichswellen eingesetzt werden.

## Patentansprüche

1. Brennkraftmaschine mit einer Kurbelwelle (3), die in Lagern aufgenommen ist, welche aus am Kurbelgehäuse angeformten Lagerschalen (4) und Lagerdeckeln (5) bestehen, die mit den Lagerschalen durch Schrauben (6) zusammengespannt sind, und mit einem Massenausgleich mit mindestens einer Ausgleichswelle (8; 9), die unterhalb der Kurbelwelle (3) in mindestens einem Lager (14) aufgenommen ist, welches jeweils aus zusammengespannten Ober- und Unterteilen (15 bzw. 16) besteht, **dadurch gekennzeichnet, daß** das zumindest eine Ausgleichswellenlager (14) unterhalb von Kurbelwellenlagern (4,5) angeordnet und durch die entsprechend verlängerten Kurbelwellenlagerschrauben (6) befestigt ist.

2. Brennkraftmaschine nach Anspruch 1, **dadurch gekennzeichnet, daß** die Oberund Unterteile (15, 16) des zumindest einen Ausgleichswellenlagers (14) zur Aufnahme der zumindest einen Ausgleichswelle (8; 9) so ausgebildet sind, **daß** die Oberteile (15) sich direkt oder indirekt auf den Lagerdeckeln (5) der darüberliegenden Kurbelwellenlager abstützen, **daß** die Kurbelwellenlagerschrauben (6) durch die Ober- und Unterteile (15 bzw. 16) des zumindest einen Ausgleichswellenlagers hindurch verlängert sind und **daß** diese Teile durch auf die Schraubenverlängerungen (17) aufgeschraubte Muttern (18) zusammengespannt sind, wobei durch zwischen Lagerdeckeln (5) und Ober- bzw. Unterteilen (15 bzw. 16) an den Schrauben (6) angebrachte Muttern (7) eine Verspannung der Lagerschalen (4) mit den Lagerdeckeln (5) erfolgt.

3. Brennkraftmaschine nach Anspruch 1, **dadurch gekennzeichnet, daß** die Oberund Unterteile (15, 16) des zumindest einen Ausgleichswellenlagers (14) zur Aufnahme der zumindest einen Ausgleichswelle (8; 9) so ausgebildet sind, **daß** die Oberteile (15) sich direkt oder indirekt auf den Lagerdeckeln (5) der darüberliegenden Kurbelwellenlager abstützen, **daß** die Kurbelwellenlagerschrauben (6) durch die Ober- und Unterteile (15 bzw. 16) des zumindest einen Ausgleichswellenlagers hindurch verlängert sind und **daß** diese Teile durch Kurbelwellenlagerschrauben (6) in Form von Kopfschrauben (40) zusammengespannt sind, die in das Unterteil (16) eingeführt in ein im Oberteil (1) des Kurbelgehäuses vorgesehenes Gewinde (41) eingreifen.

4. Brennkraftmaschine nach Anspruch 2, **dadurch gekennzeichnet, daß** das Oberteil (15) jedes Ausgleichswellenlagers (14) an dem darüberliegenden Lagerdeckel (5) anliegt und gegenüber diesem durch Paßstifte (21) fixiert ist.

5. Brennkraftmaschine nach Anspruch 2, **dadurch gekennzeichnet, daß** das Oberteil (15) jedes Ausgleichswellenlagers (14) mit dem darüberliegenden Lagerdeckel (5) einstückig gefertigt ist und diese Teile durch Cracken voneinander getrennt sind und an den Bruchflächen aneinander anliegen.

6. Brennkraftmaschine nach Anspruch 2, **dadurch gekennzeichnet, daß** zwischen dem Oberteil (15) jedes Ausgleichswellenlagers (14) und den Muttern (7), die den Lagerdeckel (5) festspannen, auf den Schraubenverlängerungen (17) Distanzhülsen (28) angeordnet sind.

7. Brennkraftmaschine nach Anspruch 6, **dadurch gekennzeichnet, daß** die Distanzhülsen (28) mit den Muttern (7) einstückig sind.

8. Brennkraftmaschine nach einem der vorhergehenden Ansprüche, mit einem Ölhobel, **dadurch gekennzeichnet, daß** der Ölhobel (27) zwischen den Oberteilen (15) der Ausgleichswellenlager (14) und den darüberliegenden Lagerdeckeln (5) angeordnet und durch parallel zu den Schraubenverlängerungen (17) verlaufende Stifte (22) fixiert ist, die sich jeweils einerseits in miteinander fluchtende Bohrungen (23,24) in den Ober- und Unterteilen (15,16) der Ausgleichswellenlager (14) und andererseits in eine Bohrung (25) im betreffenden Lagerdeckel (5) erstrecken.

9. Brennkraftmaschine nach einem der vorhergehenden Ansprüche, mit einem Ölhobel, **dadurch gekennzeichnet, daß** der Ölhobel (27) zwischen den Oberteilen (15) der Ausgleichswellenlager (14) und den darüberliegenden Lagerdeckeln (5) angeordnet und durch parallel zu den Schraubenverlängerungen (17) verlaufende Stifte (22) fixiert ist, die sich jeweils in eine Bohrung (23) im Oberteil (15) der Ausgleichswellenlager (14) und in eine zur Bohrung (23) fluchtende Bohrung (25) im betreffenden Lagerdeckel (5) erstrecken.

10. Brennkraftmaschine nach einem der Ansprüche 1 bis 7, bei der das Kurbelgehäuse aus einem Oberteil (1) und einem Unterteil (2) besteht und einen Ölhobel enthält, **dadurch gekennzeichnet, daß** der Ölhobel in einer mit dem Kurbelgehäuse-Unterteil (2) einstückigen Grundplatte (19) integriert ist, die zwischen den Oberteilen (15) der Ausgleichswellenlager (14) und den darüberliegenden Lagerdeckeln (5) durch die auf die Schraubenverlängerungen (17) aufgeschraubten Muttern (18) eingespannt ist.

11. Brennkraftmaschine nach einem der vorhergehenden Ansprüche, **dadurch gekennzeichnet, daß** zwei oder mehr Ausgleichswellen zum Massenausgleich vorgesehen sind.

## Claims

1. Combustion engine with a crankshaft (3) mounted in bearings that consist of bearing shells (4) formed in the crankcase and bearing covers (5) held onto the bearing shells by bolts (6), and having a mass balancing system comprising at least one compensation shaft (8; 9) mounted in at least one bearing (14) underneath the crankshaft (3), the said bearing consisting in each case of upper and lower portions (15 and 16 respectively) held together,
**characterised in that**
at least one compensation shaft bearing (14) is arranged under crankshaft bearings (4, 5) and is fixed in place by means of the correspondingly extended crankshaft bearing bolts (6).

2. Combustion engine according to Claim 1,
**characterised in that**
the upper and lower portions (15, 16) of the at least one compensation shaft bearing (14) which receives the at least one compensation shaft (8; 9) are formed such **that** the upper portions (15) rest directly or indirectly against the bearing covers (5) of the crankshaft bearings above, the crankshaft bearing bolts (6) are extended through the upper and lower portions (15 and 16 respectively) of the at least one compensation shaft bearing, and these components are held together by nuts (18) screwed onto the threaded extensions (17) of the bolts, such that by means of nuts (7) positioned on the bolts (6) between the upper and lower portions (15 and 16) the bearing shells (4) are held firmly onto the bearing covers (5).

3. Combustion engine according to Claim 1,
**characterised in that**
the upper and lower portions (15, 16) of the at least one compensation shaft bearing (14) which receives the at least one compensation shaft (8; 9) are formed such **that** the upper portions (15) rest directly or indirectly against the bearing covers (5) of the crankshaft bearings above, the crankshaft bearing bolts (6) extend through the upper and lower portions (15 and 16 respectively) of the at least one compensation shaft bearing, and these components are held together by crankshaft bearing bolts (6) in the form of headed bolts (40) which are inserted through the lower portion (16) and engage with a thread (41) provided in the upper portion (1) of the crankcase.

4. Combustion engine according to Claim 2,
**characterised in that**
the upper portion (15) of each compensation shaft bearing (14) is fixed on and relative to the bearing cover (5) above it by dowel pins (21).

5. Combustion engine according to Claim 2,
**characterised in that**
the upper portion (15) of each compensation shaft bearing (14) is made as one piece together with the bearing cover (5) above it, and these components are separated by cracking and rest in contact with one another on the fracture surfaces.

6. Combustion engine according to Claim 2,
**characterised in that**
between the upper portion (15) of each compensation shaft bearing (14) and the nuts (7) which hold fast the bearing cover (5), spacer sleeves (28) are fitted onto the bolt extension (17).

7. Combustion engine according to Claim 6,
**characterised in that**
the spacer sleeves (28) are made as one piece with the nuts (7).

8. Combustion engine according to any of the preceding claims, with an oil scraper,
**characterised in that**
the oil scraper (27) is arranged between the upper portions (15) of the compensation shaft bearings (14) and the bearing covers (5) above them, and is fixed by pins (22) that extend parallel to the bolt extensions (17), the said pins in each case extending at one end into mutually aligned holes (23, 24) in the upper and lower portions (15, 16) of the compensation shaft bearing (14) and at the other end into a hole (25) in the associated bearing cover (5).

9. Combustion engine according to any of the preceding claims, with an oil scraper,
**characterised in that**
the oil scraper (27) is arranged between the upper portions (15) of the compensation shaft bearings (14) and the bearing covers (5) above them, and is fixed by pins (22) that extend parallel to the bolt extensions (17), the said pins in each case extending into a hole (23) in the upper portion (15) of the compensation shaft bearing (14) and into a hole (25) aligned with the hole (23) in the associated bearing cover (5).

10. Combustion engine according to any of Claims 1 to 7, in which the crankcase consists of an upper portion (1) and a lower portion (2) and contains an oil scraper,
**characterised in that**
the oil scraper is integrated in a baseplate (19) formed in one piece with the lower portion (2) of the crankcase, the said baseplate being clamped between the upper portions (15) of the compensation shaft bearings (14) and the bearing covers (5) above them, by means of the nuts (18) screwed onto the bolt extensions (17).

11. Combustion engine according to any of the preceding claims,
**characterised in that**
two or more compensation shafts are provided for mass balancing purposes.

## Revendications

1. Moteur à combustion interne comportant un vilebrequin (3) qui est reçu dans des paliers qui sont constitués par des coques de palier (4) conformées sur le carter de vilebrequin et par des couvercles de palier (5) qui sont serrés avec les coques de palier par des vis (6), et comportant un équilibrage des masses avec au moins un arbre d'équilibrage (8 ; 9) qui est reçu au-dessous du vilebrequin (3) dans au moins un palier (14) qui est constitué par une pièce supérieure et une pièce inférieure respectives (15 ou 16) serrées ensemble, **caractérisé en ce que** ledit au moins un palier d'arbre d'équilibrage (14) est agencé au-dessous de paliers (4,5) du vilebrequin et fixé par les vis (6) des paliers de vilebrequin qui sont prolongées en correspondance.

2. Moteur à combustion interne selon la revendication 1, **caractérisé en ce que** la pièce supérieure et la pièce inférieure (15, 16) dudit au moins un palier d'arbre d'équilibrage (14) pour recevoir ledit au moins un arbre d'équilibrage (8 ; 9) sont réalisées de telle sorte que les pièces supérieures (15) s'appuient directement ou indirectement sur les couvercles (5) des paliers de vilebrequin situés au-dessus, **en ce que** les vis (6) des paliers de vilebrequin sont prolongées en traversant la pièce supérieure et la pièce inférieure (15 ou 16) dudit au moins un palier d'arbre d'équilibrage, et **en ce que** ces pièces sont serrées par des écrous (18) vissés sur les prolongements de vis (17), un serrage des coques de palier (4) avec les couvercles de palier (5) s'effectuant par des écrous (7) agencés sur les vis (6) entre les couvercles de palier (5) et les pièces supérieure ou inférieure (15 ou 16).

3. Moteur à combustion interne selon la revendication 1, **caractérisé en ce que** les pièces supérieure et inférieure (15, 16) dudit au moins un palier d'arbre d'équilibrage (14) destiné à recevoir ledit au moins un arbre d'équilibrage (8 ; 9) sont réalisées de telle sorte que les pièces supérieures (15) s'appuient directement ou indirectement sur les couvercles (5) des paliers de vilebrequin situés au-dessus, **en ce que** les vis (6) des paliers de vilebrequin sont prolongées en traversant les pièces supérieure et inférieure (15 ou 16) dudit au moins un palier d'arbre d'équilibrage, et **en ce que** ces pièces sont serrées par des vis de palier de vilebrequin (6) sous forme de vis à tête (40) qui sont introduites dans la pièce inférieure (16) et s'engagent dans un taraudage (41) prévu dans la pièce supérieure (1) du carter de vilebrequin.

4. Moteur à combustion interne selon la revendication 2, **caractérisé en ce que** la pièce supérieure (15) de chaque palier d'arbre d'équilibrage (14) s'appuie contre le couvercle de palier (5) situé au-dessus et est fixée par rapport à celui-ci par des goupilles d'ajustement (21).

5. Moteur à combustion interne selon la revendication 2, **caractérisé en ce que** la pièce supérieure (15) de chaque palier d'arbre d'équilibrage (14) est réalisée d'un seul tenant avec le couvercle de palier (5) situé au-dessus et ces pièces sont séparées l'une de l'autre par rupture et appliquées l'une contre l'autre au niveau des surfaces de rupture.

6. Moteur à combustion interne selon la revendication 2, **caractérisé en ce que** des douilles d'écartement (28) sont agencées sur les prolongements de vis (17) entre la pièce supérieure (15) de chaque palier d'arbre d'équilibrage (14) et les écrous (7) qui serrent le couvercle de palier (5).

7. Moteur à combustion interne selon la revendication 6, **caractérisé en ce que** les douilles écartement (28) sont d'un seul tenant avec les écrous (7).

8. Moteur à combustion interne selon l'une des revendications précédentes, comportant un racleur à huile, **caractérisé en ce que** le racleur à huile (27) est agencé entre les pièces supérieures (15) des paliers d'arbre d'équilibrage (14) et les couvercles de palier (5) situés au-dessus et est fixé par des goupilles (22) s'étendant parallèlement aux prolongements de vis (17), goupilles qui s'étendent chacune d'une part dans des perçages (23, 24) en alignement l'un avec l'autre dans les pièces supérieures et inférieures (15, 16) des paliers d'arbre d'équilibrage (14) et d'autre part dans un perçage (25) dans le couvercle de palier concerné (5).

9. Moteur à combustion interne selon l'une des revendications précédentes, comportant un racleur à huile, **caractérisé en ce que** le racleur à huile (27) est agencé entre les pièces supérieures (15) des paliers d'arbre d'équilibrage (14) et les couvercles de palier (5) situés au-dessus et est fixé par des goupilles (22) s'étendant parallèlement aux prolongements de vis (17), goupilles qui s'étendent chacune dans un perçage (23) dans la pièce supérieure (15) des paliers d'arbre d'équilibrage (14) et dans un perçage (25) dans le couvercle de palier concerné (5), en alignement avec le perçage précédent (23).

10. Moteur à combustion interne selon l'une des revendications 1 à 7, dans lequel le carter de vilebrequin est constitué par une pièce supérieure (1) et par une pièce inférieure (2) et comprend un racleur à huile, **caractérisé en ce que** le racleur à huile est intégré dans une plaque de base (19) d'un seul tenant avec la pièce inférieure (2) du carter de vilebrequin, plaque qui est serrée entre les pièces supérieures (15) des paliers d'arbre d'équilibrage (14) et les couvercles de palier (5) situés au-dessus par les écrous (18) vissés sur les prolongements de vis (17).

11. Moteur à combustion interne selon l'une des revendications précédentes, **caractérisé en ce qu'**il est prévu deux ou plusieurs arbres d'équilibrage pour l'équilibrage des masses.
